# EUROPÄISCHE PATENTANMELDUNG

(11) **EP 1 016 494 A2**
(43) Veröffentlichungstag der Anmeldung: **05.07.2000**
(21) Anmeldenummer: 99125817.9
(22) Anmeldetag: 23.12.1999
(51) Int. Cl.: B23K 26/14

(54) **Verfahren und Vorrichtung zur Lasermaterialbearbeitung unter Schutzgas mit unterschiedlichem Volumenstrom als Optikschutz**

(30) Priorität: 01.01.1999 DE 19900001
(71) Anmelder: Linde Technische Gase GmbH, 82049 Höllriegelskreuth (DE)
(72) Erfinder: Herrmann, Johan, 85716 Unterschleissheim (DE)
(74) Vertreter: Obermüller, Bernhard

(57) **Zusammenfassung**

Die Erfindung betrifft ein Verfahren und Vorrichtung zur Lasermaterialbearbeitung, insbesondere zum Laserschweißen, wobei ein fokussierter Laserstrahl (3) auf das zu bearbeitende Werkstück (9) geführt wird und die Optik (6) im Lasermaterialbearbeitungskopf mit Hilfe eines Gasstromes (7) geschützt wird. Erfindungsgemäß wird das Schutzgas (7) in einem in Strömungsrichtung ersten Bereich (13) des Düsenkanals einer zum Laserstrahl koaxial angeordneten Düse (5) als Koaxialjet (7) zum Schutz der Optik geführt und das Schutzgas mit verringertem Volumenstrom über einen in Strömungsrichtung zweiten Bereich (14) des Düsenkanals der Düse (5) gegen die Oberfläche des Werkstückes (9) geleitet. In Ausgestaltung der Erfindung wird das Schutzgas im in Strömungsrichtung ersten Bereich des Düsenkanals der Düse mit vergleichsweise hoher Strömungsgeschwindigkeit zum Schutz der Optik geführt und das Schutzgas mit verminderter Strömungsgeschwindigkeit gegen die Oberfläche des Werkstückes geleitet. Mit Vorteil wird das Schutzgas (7) teilweise im Lasermaterialbearbeitungskopf über einen oder mehrere Gaskanäle (11) im Kreislauf geführt.

## Beschreibung

Die Erfindung betrifft ein Verfahren zur Lasermaterialbearbeitung, wobei ein fokussierter Laserstrahl auf das zu bearbeitende Werkstück geführt wird und die Optik im Lasermaterialbearbeitungskopf mit Hilfe eines Gasstromes geschützt wird. Die Erfindung betrifft ferner eine Vorrichtung zur Lasermaterialbearbeitung, welche Mittel zum Führen eines fokussierten Laserstrahls auf ein zu bearbeitendes Werkstück und Mittel zum Schutz der Optik im Lasermaterialbearbeitungskopf mit Hilfe eines Gasstromes umfaßt.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Als Laserbearbeitungsverfahren sind vor allem das das Laserstrahlschweißen, Laserstrahlschneiden und Verfahren der Laserstrahloberflächenbehandlung bekannt. Beim Laserstrahlschneiden wird zwischen drei Verfahrensvarianten unterschieden, dem Laserstrahlbrennschneiden, dem Laserstrahlschmelzschneiden und dem Laserstrahlsublimierschneiden. Bei den Verfahren der Laserstrahloberflächenbehandlung umfassen vor allem das Laserstrahlhärten, das Laserstrahlumschmelzen, das Laserstrahllegieren, das Laserstrahlbeschichten und das Laserstrahlbohren. Die Verfahren der Laserstrahloberflächenbehandlung finden in der Regel dort Verwendung, wo konventionelle Oberflächenverfahren nicht oder nur mit großen Nachteilen eingesetzt werden können.

Bei den aufgezählten Verfahren wird durch die hohe Energie des Laserstrahls Material des zu bearbeitenden Werkstücks erhitzt, aufgeschmolzen oder verdampft. Bei der Lasermaterialbearbeitung kommen üblicherweise Schutz- und/oder Prozeßgase bzw. Arbeitsgase zum Einsatz. Je nach Verfahren und zu bearbeitendem Material können die eingesetzten Gase unterschiedliche Aufgaben zu erfüllen haben. So bewirkt beispielsweise der Einsatz eines harten Gasstrahls einen Laserschnitt, bei Abdeckung durch Schutzgas kann eine Schweißnaht, eine Härtespur, eine Spur um geschmolzenes Material, eine Beschriftung, eine Gravur oder dergleichen erzeugt werden. Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden dazu technische Gase eingesetzt, um diese Materialberarbeitungsprozesse effektiver, schneller und/oder mit verbesserter Qualität durchführen zu können.

Das Laserschweißen (üblicherweise unter Einsatz eines Laserschweißkopfes) wird nachfolgend stellvertretend für die Lasermaterialbearbeitung näher betrachtet.

Beim Laserschweißen entstehen häufig durch den Schweißprozeß Spritzer, welche sich vom Werkstück weg bewegen und die Laseroptik verschmutzen. Mit dem Begriff der Laseroptik werden dabei insbesondere Linsen, aber auch Spiegel oder andere optische Elemente angesprochen.

Beim Laserschweißen finden Schutzgase vor allem zur Abdeckung der Schweißnaht durch Schutzgas Anwendung. Denn bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden dazu technische Gase eingesetzt, um diese Materialberarbeitungsprozesse effektiver, schneller und/oder mit verbesserter Qualität durchführen zu können. Beim Laserschweißen sollen die Schutzgase in erster Linie verhindern, daß Laserschweißnähte beispielsweise bei Edelstahlschweißungen oxidiert werden und anschließend nachgearbeitet werden müssen, daß Schweißnähte Poren enthalten oder daß andere qualitätsmindernde Merkmale auftreten.

Beim Laserschweißen werden - ebenso wie dies bei anderen Lasermaterialbearbeitungsverfahren möglich ist - auch koaxiale Schutzgase verwendet. Der Einsatz technischer Gase als Schutzgase ist in zahlreichen Fällen für den Schweißprozeß sehr sinnvoll und wünschenswert. Allerdings bedingt ein brauchbares Laserschweißen einen Schutz der Laseroptik. Denn die Kraft der Schutzgase ist zum wirksamen Schutz der Optik aber zu gering, da der Schweißprozeß selbst nur geringe Gasdrücke verträgt. Es ist daher zusätzlich zum relativ langsam strömenden koaxialen Schutzgas ein Optikschutz erforderlich.

In vielen Fällen wird zum Schutz der Laseroptik zwischen Laseroptik und Schweißprozeß ein sogenannter 'Crossjet' eingesetzt. Hierbei handelt es sich um eine Gasströmung (Preßluft), welche senkrecht zum Laserstrahl mit hoher Strömungsgeschwindigkeit bläst und damit die Spritzer von ihrem Weg in Richtung Optik abbringt.

Die Verwendung eines Crossjets macht in der Praxis bislang allerdings den Einsatz eines koaxialen Schutzgases nicht mehr möglich. Das Schutzgas müßte entweder den Crossjet kreuzen, was strömungstechnisch nicht möglich ist, oder an der Düsenspitze in einiger Entfernung vom Crossjet zugeführt werden, was die Ausbildung einer gerichteten Strömung auf den Schweißprozeß verhindert. Ferner ist eine Beeinflussung des langsam strömenden Schutzgases durch den Crossjet auch im letztgenannten Fall nicht auszuschließen. Durch die starken Turbulenzen, welche der Crossjet hervorruft, wird darüber hinaus Schutzgas für den Schweißprozeß (auch Schutzgas, welches nicht koaxial zugeführt wird) gestört und verunreinigt.

Beim Schweißen vor allem mit Nd-YAG-Lasern kommen auch billigere Schutzfenster vor der teuren Fokussierlinse zum Einsatz. Die Fenster müssen immer wieder erneuert werden. Mit zunehmender Verschmutzung der Schutzfenster verschlechtert sich der optische Zugang bzw. die Einstrahlung des Lasers auf das Werkstück. Die beschriebene Variante mit Schutzfenstern alleine ermöglicht folglich auch kein befriedigendes Laserschweißen.

Der vorliegenden Erfindung liegt daher die Aufgabe zugrunde, ein Verfahren und eine Vorrichtung der eingangs genannten Art aufzuzeigen, bei welchen die Materialbearbeitung mittels Laser im Hinblick auf den Schutz der Optik verbessert wird.

Insbesondere sollen koaxial zugeführte Schutzgase ermöglicht werden. Es wird ein Bearbeiten unter stabilen Prozeßparametern (z.B. Strahlqualität, Schutzgasreinheit) angestrebt. Der Einsatz unterschiedlicher Schutzgase soll dabei grundsätzlich nicht eingeschränkt werden.

Diese Aufgabe wird erfindungsgemäß für das Verfahren dadurch gelöst, daß das Schutzgas in einem in Strömungsrichtung ersten Bereich des Düsenkanals einer zum Laserstrahl koaxial angeordneten Düse als Koaxialjet zum Schutz der Optik geführt und das Schutzgas mit verringertem Volumenstrom über einen in Strömungsrichtung zweiten Bereich des Düsenkanals der Düse gegen die Oberfläche des Werkstückes geleitet wird.

Diese Aufgabe wird erfindungsgemäß für die Vorrichtung dadurch gelöst, daß ein in Strömungsrichtung erster Bereich eines Düsenkanals einer zum Laserstrahl koaxial angeordneten Düse zur Führung von Schutzgas als Koaxialjet zum Schutz der Optik und Mittel zur Verringerung des Volumenstromes des Schutzgases in einem in Strömungsrichtung zweiten Bereich des Düsenkanals der Düse gegenüber dem Volumenstrom des Schutzgases im in Strömungsrichtung ersten Bereich des Düsenkanals der Düse vorgesehen sind.

Durch die unterschiedlichen Volumenströme des Schutzgases können mit dem Schutzgas zwei Funktionen erfüllt werden: Einerseits sorgt Schutzgas mit vergleichsweise großem Volumenstrom für einen wirksamen Schutz der Optik. Andrerseits erfüllt ein vergleichsweise geringer Volumenstrom an Schutzgas den eigentlichen Zweck der Abdeckung beim Schweißprozeß.

Im Rahmen der Erfindung kann auch eine Spiegeloptik Verwendung finden. Bei geringen Laserleistungen können Fenster für eine werkstückseitige Gasdichtigkeit der Optik eingesetzt werden.

In Ausgestaltung der Erfindung wird das Schutzgas im in Strömungsrichtung ersten Bereich des Düsenkanals der Düse mit vergleichsweise hoher Strömungsgeschwindigkeit zum Schutz der Optik geführt und das Schutzgas mit verminderter Strömungsgeschwindigkeit gegen die Oberfläche des Werkstückes geleitet. Durch diese Maßnahme werden die beiden Funktionen des Schutzgases zusätzlich unterstützt.

Mit Vorteil wird das Schutzgas teilweise im Lasermaterialbearbeitungskopf über einen oder mehrere Gaskanäle im Kreislauf geführt. Dadurch kann die benötigte Schutzgasmenge reduziert werden.

In Weiterbildung der Erfindung sind Mittel zum teilweisen Absaugen von Schutzgas aus dem ersten Bereich des Düsenkanals der Düse vorgesehen. Diese können insbesondere Mittel zur Erzeugung einer auf den Schutzgasstrom im ersten Bereich des Düsenkanals der Düse wirkenden Zentrifugalkraft umfassen. Bevorzugt dient ein Flügelrad zur Erzeugung der Zentrifugalkraft. Das Flügelrad kann beispielsweise über einen Elektromotor, etwa in Verbindung mit Zahnrädern oder einem Zahnriemen, über einen magnetischen oder pneumatischen Antrieb bewegt werden.

Es ist eine Ausgestaltung des Flügelrades möglich, wobei die Drehzahl und/oder die Stellung der Flügel variiert werden können. Das ermöglicht beispielsweise die Wahl, ob mehr Gas von der Optik her oder aber auch vom Werkstück her angesaugt werden soll.

Unabhängig vom oder in Ergänzung zum Flügelrad oder anderer Absaugmittel ist eine Lasche zur Umlenkung des Gasstrahles von der Optik weg denkbar.

Im Rahmen der Erfindung kann vorgesehen sein, daß durch den in Strömungsrichtung zweiten Bereich des Düsenkanals der Düse einfliegende Spritzer gesammelt werden, beispielsweise in einer Spritzerfalle.

Es können Mittel zur Reinigung und/oder Kühlung des Schutzgases insbesondere in dem oder den Gaskanälen des Kreislaufs vorgesehen sein.

Die Erfindung kann im Zusammenhang mit allen Arten von Lasern zur Anwendung kommen. Vor allem eignet sie sich für den Einsatz bei der Laserbearbeitung mit Nd-YAG-Lasern, Eximer-Lasern, Dioden-Lasern und CO₂-Lasern.

Als Schutzgase eignen sich für das Laserschweißen vor allem inerte Gase wie Argon, Neon und Helium, aber auch beispielsweise Stickstoff, Sauerstoff, Kohlendioxid, Wasserstoff, Kohlenwasserstoffe und die Gemische der vorgenannten Gase.

Die Vorteile der Erfindung lassen sich folgendermaßen zusammenfassen:
- Die Laseroptik bleibt vor Verschmutzung sicher geschützt.
- Es kann koaxiales Schutzgas vernünftig für den Bearbeitungsprozeß eingesetzt werden.
- Die Reinheit des Schutzgases bleibt erhalten.
- Der Anwender ist frei in der Wahl der Schutzgasmenge für den Bearbeitungsprozeß.
- Es wird keine zusätzliche, relativ große Menge an Preßluft für einen Crossjet benötigt.
- Der Bearbeitungsprozeß (z.B. Schweißprozeß) wird für den Anwender in der Handhabung wesentlich vereinfacht.
- Auf Schutzgläser (Fenster) kann in der Regel verzichtet werden, so daß deren Nachteile wie Verschlechterung der Strahlqualität des Lasers und ständige Änderung der Prozeßparameter vermieden werden können.

Die Erfindung kann neben dem Laserschweißen auch im Zusammenhang mit anderen Laserbearbeitungsverfahren nutzbringend eingesetzt werden (beispielsweise beim Laserschneiden). Dies trifft insbesondere auf Laserbearbeitungsverfahren zu, bei denen der Bearbeitungsprozeß lediglich einen geringen Gasdruck des Schutz-oder Arbeitsgases erlaubt, d.h. beispielsweise ein Laserschneiden ohne hohen Gasdruck auf die Schnittfuge. Als weitere Laserbearbeitungsverfahren kommen vor allem das Schneiden, Bohren, Umschmelzen, Abtragen, Sintern und/oder Härten unter Einsatz eines Lasers in Frage.

Die Erfindung ermöglicht ferner den Einsatz anderer Strahlungsquellen als Laser.

Im folgenden soll die Erfindung anhand eines schematisch dargestellten Ausführungsbeispieles näher erläutert werden.

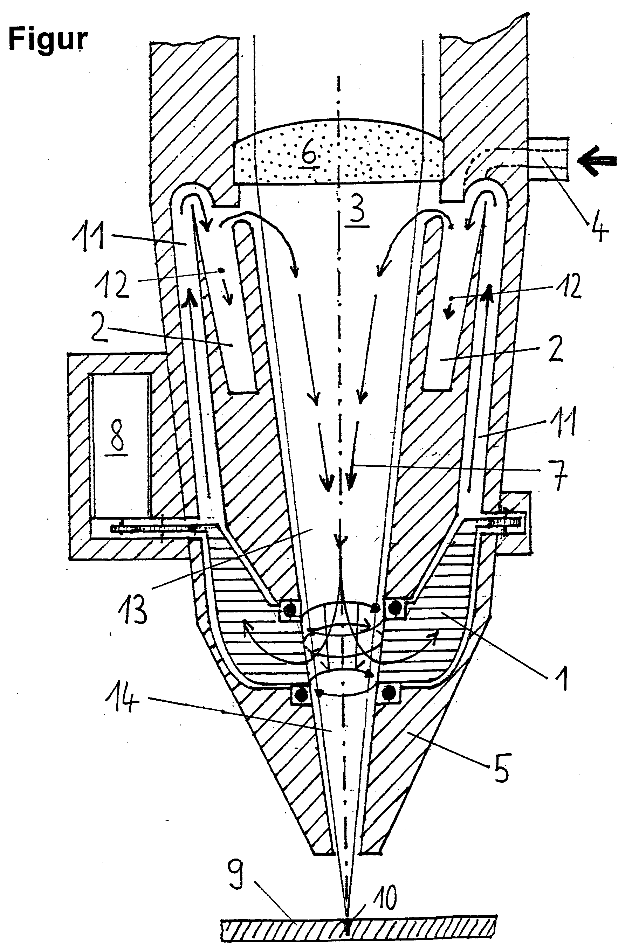

Hierbei zeigt die
- Figur 1: eine Prozeßgasdüse gemäß der Erfindung.

Die in Figur 1 dargestellte Laserschweißkopf weist eine Linse 6 zur Fokussierung des Laserstrahls 3 auf. Über die Schutzgaszuführung 4 wird Schutzgas zugeführt. Das Schutzgas strömt in einem in Strömungsrichtung ersten Bereich 13 des Düsenkanals der zum Laserstrahl koaxial angeordneten Düse 5 als Koaxialjet 7 mit vergleichsweise hoher Strömungsgeschwindigkeit. Dies dient dem Schutz der Optik 6. Das Schutzgas wird mit verminderter Strömungsgeschwindigkeit gegen die Oberfläche des Werkstückes 9, nämlich den Schweißprozeß 10, geleitet.

Zwischen der Laseroptik 6 und dem Schweißprozeß 10 ist ein Flügelrad 1 eingebaut, dessen Drehachse koaxial zum Laserstrahl 3 steht. Das Flügelrad 1 dreht sich mit einer ausreichend hohen Geschwindigkeit (die Drehung ist durch Pfeile angedeutet), so daß durch die Zentrifugalkraft das Gas 7 aus der Mitte (in Strömungsrichtung erster Bereich 13 des zentralen Düsenkanals) abgesaugt und durch das Flügelrad 1 nach außen gedrückt wird. Von dort wird durch die Gestaltung der Gaskanäle 11 die Gasströmung zuerst entgegen der Strahlrichtung des Laserstrahls 3 und dann - dicht unter der Optik 6 - wieder in den Strahlengang zurück und nach unten in Richtung der Laserstrahlung 3 umgelenkt wird. So kann unter der Optik zugeführtes Schutzgas den Bereich zwischen Schutzgasdüse 5 und Optik 6 sehr oft durchströmen, bis es den Schweißkopf durch die Schutzgasdüse 5 zum Schweißprozeß 10 verläßt. Damit wird das Schutzgas mit gegenüber dem in Strömungsrichtung ersten Bereich 13 des Düsenkanals der Düse 5 verringertem Volumenstrom über den in Strömungsrichtung zweiten Bereich 14 des Düsenkanals der Düse 5 gegen die Oberfläche des Werkstückes 9 geleitet.

Die Strömungsgeschwindigkeit und damit die Schutzwirkung für die Optik kann durch die Drehzahl des Flügelrades 1 bestimmt und optimiert werden.

Durch die Schutzgasdüse 5 einfliegende Spritzer 12 werden durch den Koaxialjet 7 daran gehindert, bis zur Linse 6 vorzudringen. Spritzer 12 werden entweder durch den Koaxialjet 7 wieder in Richtung Werkstück 9 aus der Schutzgasdüse 5 gedrückt oder durch das Flügelrad 1 aus dem zentralen Düsenkanal abgesaugt und in der Spritzerfalle 2 gesammelt. Aufgrund der unterschiedlichen Fliehkräfte auf Gas und Materialspritzer 12 können die Spritzer 12 verhältnismäßig leicht aus dem Schutzgas extrahiert und gesammelt werden.

In Figur 1 ist ein Antrieb 8 (Elektromotor) mit Ankopplung über Zahnräder an das Flügelrad gezeigt.

Mit der gezeigten Vorrichtung ist es auf einfache Art und Weise möglich, die Optik zuverlässig zu schützen und die Reinheit der eingesetzten Schutzgase zu erhalten.

## Patentansprüche

1. Verfahren zur Lasermaterialbearbeitung, wobei ein fokussierter Laserstrahl (3) auf das zu bearbeitende Werkstück (9) geführt wird und die Optik (6) im Lasermaterialbearbeitungskopf mit Hilfe eines Gasstromes (7) geschützt wird, **dadurch gekennzeichnet**, daß das Schutzgas (7) in einem in Strömungsrichtung ersten Bereich (13) des Düsenkanals einer zum Laserstrahl koaxial angeordneten Düse (5) als Koaxialjet (7) zum Schutz der Optik geführt und das Schutzgas mit verringertem Volumenstrom über einen in Strömungsrichtung zweiten Bereich (14) des Düsenkanals der Düse (5) gegen die Oberfläche des Werkstückes (9) geleitet wird.

2. Verfahren nach Anspruch 1, dadurch gekennzeichnet, daß das Schutzgas (7) im in Strömungsrichtung ersten Bereich (13) des Düsenkanals der Düse (5) mit vergleichsweise hoher Strömungsgeschwindigkeit zum Schutz der Optik geführt und das Schutzgas mit verminderter Strömungsgeschwindigkeit gegen die Oberfläche des Werkstückes (9) geleitet wird.

3. Verfahren nach Anspruch 1 oder 2, dadurch gekennzeichnet, daß das Schutzgas (7) teilweise im Lasermaterialbearbeitungskopf über einen oder mehrere Gaskanäle (11) im Kreislauf geführt wird.

4. Verfahren nach einem der Ansprüche 1 bis 3, dadurch gekennzeichnet, daß Mittel (1) zum teilweisen Absaugen von Schutzgas (7) aus dem ersten Bereich (13) des Düsenkanals der Düse (5) verwendet werden.

5. Verfahren nach Anspruch 4, dadurch gekennzeichnet, daß Mittel (1) zur Erzeugung einer auf den Schutzgasstrom (7) im ersten Bereich (13) des Düsenkanals der Düse (5) wirkenden Zentrifugalkraft eingesetzt werden.

6. Verfahren nach Anspruch 5, dadurch gekennzeichnet, daß gegebenenfalls ein und/oder der Stellung der Flügel variierbares Flügelrad (1) zur Erzeugung der Zentrifugalkraft benutzt wird.

7. Verfahren nach einem der Ansprüche 1 bis 6, dadurch gekennzeichnet, daß durch den in Strömungsrichtung zweiten Bereich (14) des Düsenkanals der Düse (5) einfliegende Spritzer (12) gesammelt (2) werden.

8. Verfahren nach einem der Ansprüche 1 bis 7, dadurch gekennzeichnet, daß Mittel zur Reinigung und/oder Kühlung des Schutzgases (7) insbesondere in dem oder den Gaskanälen (11) eingesetzt werden.

9. Vorrichtung zur Lasermaterialbearbeitung umfassend Mittel zum Führen eines fokussierten Laserstrahls (3) auf ein zu bearbeitendes Werkstück (9) und Mittel (4) zum Schutz der Optik (6) im Lasermaterialbearbeitungskopf mit Hilfe eines Gasstromes (7), **dadurch gekennzeichnet**, daß ein in Strömungsrichtung erster Bereich (13) eines Düsenkanals einer zum Laserstrahl koaxial angeordneten Düse (5) zur Führung von Schutzgas (7) als Koaxialjet zum Schutz der Optik und Mittel (1) zur Verringerung des Volumenstromes des Schutzgases (7) in einem in Strömungsrichtung zweiten Bereich (14) des Düsenkanals der Düse (5) gegenüber dem Volumenstrom des Schutzgases (7) im in Strömungsrichtung ersten Bereich (13) des Düsenkanals der Düse (5) vorgesehen sind.

10. Vorrichtung nach Anspruch 9, dadurch gekennzeichnet, daß der in Strömungsrichtung erste Bereich (13) des Düsenkanals der Düse (5) zum Führen von Schutzgas (7) mit vergleichsweise hoher Strömungsgeschwindigkeit und Mittel (1) zur Verminderung der Strömungsgeschwindigkeit des Schutzgases im in Strömungsrichtung zweiten Bereich (14) des Düsenkanals der Düse (5) vorgesehen sind.

11. Vorrichtung nach Anspruch 9 oder 10, dadurch gekennzeichnet, daß ein oder mehrere Gaskanäle (11) vorgesehen sind, über die im Lasermaterialbearbeitungskopf das Schutzgas (7) teilweise im Kreislauf geführt wird.

12. Vorrichtung nach einem der Ansprüche 9 bis 11, dadurch gekennzeichnet, daß Mittel (1) zum teilweisen Absaugen von Schutzgas aus dem ersten Bereich (13) des Düsenkanals der Düse (5) vorgesehen sind.

13. Vorrichtung nach Anspruch 12, dadurch gekennzeichnet, daß Mittel (1) zur Erzeugung einer auf den Schutzgasstrom (7) im ersten Bereich (13) des Düsenkanals der Düse (5) wirkenden Zentrifugalkraft vorgesehen sind.

14. Vorrichtung nach Anspruch 13, dadurch gekennzeichnet, daß ein gegebenenfalls hinsichtlich seiner Drehzahl und/oder der Stellung der Flügel variierbares Flügelrad (1) zur Erzeugung der Zentrifugalkraft vorgesehen ist.

15. Vorrichtung nach einem der Ansprüche 9 bis 14, dadurch gekennzeichnet, daß eine Spritzerfalle (2) zum Sammeln der durch den in Strömungsrichtung zweiten Bereich (14) des Düsenkanals der Düse (5) einfliegende Spritzer (12) vorhanden ist.

16. Vorrichtung nach einem der Ansprüche 9 bis 15, dadurch gekennzeichnet, daß Mittel zur Reinigung und/oder Kühlung des Schutzgases (7) insbesondere in dem oder den Gaskanälen (11) vorgesehen sind.

17. Anwendung des Verfahrens nach einem der Ansprüche 1 bis 7 oder der Vorrichtung nach einem der Ansprüche 9 bis 16 beim Schweißen, Schneiden, Bohren, Umschmelzen, Abtragen, Sintern und/oder Härten unter Einsatz eines Lasers.

18. Anwendung eines Verfahrens nach einem der Ansprüche 1 bis 7 oder 17 oder einer Vorrichtung nach einem der Ansprüche 9 bis 16 unter Einsatz einer anderen Strahlungsquelle als die des Laser.
